**Europäisches Patentamt**

**European Patent Office**

**Office européen des brevets**

(11) Veröffentlichungsnummer: **0 422 390 A1**

## (12) EUROPÄISCHE PATENTANMELDUNG

(21) Anmeldenummer: **90117155.3**

(22) Anmeldetag: **06.09.90**

(51) Int. Cl.⁵: **C04B 18/06, C04B 28/16**

(30) Priorität: **14.09.89 DE 3930693**

(43) Veröffentlichungstag der Anmeldung:
**17.04.91 Patentblatt 91/16**

(84) Benannte Vertragsstaaten:
**AT BE CH DE DK ES FR GB GR IT LI LU NL SE**

(71) Anmelder: **NORINA Bautechnik GmbH
Regensburger Str. 334
W-8500 Nürnberg 30(DE)**

(72) Erfinder: **Die Erfinder haben auf ihre
Nennung verzichtet**

(74) Vertreter: **LOUIS, PÖHLAU, LOHRENTZ &
SEGETH
Kesslerplatz 1 Postfach 3055
W-8500 Nürnberg-1(DE)**

(54) **Verwendung von Wirbelschichtasche in Estrichmörtel.**

(57) Die Erfindung betrifft die Verwendung einer aus einer Mischung aus Anhydritbinder, Sand, Wirbelschichtasche aus der Verfeuerung schwefelhaltiger Brennstoffe, insbes. Kohle, Wasser und üblichen Zusatzstoffen aufbereiteten Mörtels zur Herstellung von Estrichböden. Die Erfindung bringt gegenüber dem Stand der Technik nicht nur eine Kosteneinsparung bei der Herstellung von Anhydritbinder-Estrichböden mit sich, sondern trägt auch zu einer umweltfreundlichen Entsorgung der bei der Wirbelschichtverbrennung von Kohle anfallenden Aschehalden bei. Der erhaltene Estrichboden weist günstige technologische Eigenschaften auf, insbesondere hinsichtlich Biegezugfestigkeit und Quellmass.

EP 0 422 390 A1

EP 0 422 390 A1

## VERWENDUNG VON WIRBELSCHICHTASCHE IN ESTRICHMÖRTEL

Aus der DE-OS 38 08 539 ist die Verwendung von Wirbelschichtasche zur Herstellung von Zuschlagsstoffen, beispielsweise für Leichtbeton oder Trockenbauplatten, bekannt. Dabei wird die aus der Feuerungsanlage ausgetragene Wirbelschichtasche u. a. mit einem Bindemittel wie Zement, Kalk oder Gips verarbeitet.

In der DE-OS 33 24 708 wird die Verwendung von Wirbelschichtasche in Baustoffen für den Untertagebau, z.B. für die Errichtung von Dämmen und Pfeilern, beschrieben.

In der DE-OS 37 26 903 ist die Verwendung von Hochofenschlacke als hydraulisches Bindemittel für die Herstellung eines Fließestrichmörtels angegeben. Da die chemische Zusammensetzung von Hochofenschlacke nicht vergleichbar ist mit der beim Wirbelschicht-Feuerungsverfahren anfallenden Asche - dies gilt vor allem hinsichtlich des Gehalts an wasserfreien Calciumsulfat -können die bei einem solchen Estrich erhaltenen Ergebnisse nicht auf Estrichmörtel anderer Bindemittelbasis übertragen werden.

Aus der DE-AS 10 77 130 ist die Verwendung von gemahlener Schlacke als Zuschlag zu einem Estrichmörtel auf Anhydritbasis bekannt. Über die Herkunft oder Zusammensetzung der Schlacke ist in der DB-AS nichts angegeben.

Wirbelschichtasche fällt in grossen Mengen bei der Verbrennung von vorzugsweise ballastreichen Brennstoffen, insbes. Kohle, im Wirbelschicht-Feuerungsverfahren an. Um den in den Brennstoffen vorhandenen Schwefel zu binden, wird dem Feuerungsraum Calciumoxid oder Calciumkarbonat zugegeben, was dazu führt, dass die anfallende Asche u.a. einen vergleichsweise hohen Anteil an wasserfreiem Calciumsulfat enthält ( 10 - 20% )

Um eine spezielle Modifikation von wasserfreiem Calciumsulfat handelt es sich bei dem im Anhydritbinder gemäss DIN 4208 (März 84) enthaltenen Calciumsulfat. Diese Modifikation -nachfolgend "Anhydrit - wird durch Zugabe von sog. Anregern (z.B. Baukalk, Kaliumsulfat) zu einem Bindermaterial aufbereitet (DIN 4208), aus dem unter Zugabe von Sand und Wasser ein Mörtel zur Herstellung von Estrichböden hergestellt werden kann (DIN 18353, August 1974). Die dabei von dem ausgehärteten Estrichboden verlangten Materialeigenschaften (o.a. Biegezugfestigkeit sind in der DIN 18560 Teil 2 angegeben.

Für die Herstellung eines solchen Anhydritestrichs werden Anhydrite verwendet, die aus natürlichen Vorkommen (Naturanhydrit) stammen, oder bei einem chemischen Arbeitsgang, z.B. bei der Flußsäureherstellung aus Flußspat, anfallen (synthetischer Anhydrit).

Nachdem die umweltfreundliche Entsorgung der auf Sondermüllhalden verbrachten Wirbelschichtasche nach wie vor Probleme mit sich bringt, wäre es nützlich, für eine solche Asche ein weiteres Anwendungsgebiet zu erschliessen. Hierin ist die Aufgabe der vorliegenden Erfindung zu sehen.

Es wurde gefunden, dass die Aufbereitung von Wirbelschichtasche mit Anhydritbinder, Sand, Wasser und Zusatzstoffen aus der Gruppe: Verflüssiger, Dispergentien, Stabi lisatoren und Entschäumer, einen gstrichmörtel ergibt, der nicht nur zur Lösung des vorerwähnten Entsorgungsproblems mit beiträgt, sondern im Zuge seiner Aushärtung überraschenderweise auch besonders günstige Materialeigenschaften mit sich bringt. Desweiteren ermässigen sich durch den (teilweise) Ersatz von natürlichem oder synthetischem Anhynrit durch wirbelschichtasche die Rohstoff-Einstandskosten für den Estrichmörtel. Selbstverständlich können die vorerwähnten Zusatzstoffe einzeln wie auch als Mischung verwendet werden.

Die erfindungsgemäss verwendete Wirbelschichtasche stammt aus den eingangs beschriebenen Feuerungsanlagen. Ihre Zusammensetzung hängt wesentlich von der Art des verbrannten Brennstoffes ab. Hiernach richtet sich u.a. auch der Anteil an wirbelschichtasche in dem erfindungsgemässen Estrichmörtel. Er kann bei der Verbrennung von Kohle mit einem vergleichsweise hohen Schwefelgehalt (z.B. 3 %) höher liegen als bei einer Asche, die aus der Wirbelschichtverbrennung relativ wenig Schwefel enthaltender Brennstoffe stammt. Durch einfache, sich an die vorerwähnten DIN-Vorschriften anlehnende Versuche kann im Einzelfall die für die Herstellung eines Estrichbodens bestimmter Qualität geeignete Zusammensetzung ermittelt werden.

Bei einem Estrichmörtel teigiger Konsistenz, der nach dem Verteilen auf dem Unterboden durch Stampfen verdichtet und durch sog. Abziehen mit einer ebenen, niveaugerechten Oberfläche versehen wird, kann der Ascheanteil bis zu 80 % betragen. Vorzugsweise liegt der Ascheanteil zwischen 20 und 50 Gew.-%. Hinsichtlich der geforderten Biegezugfestigkeit (vgl. DIN 4109) und der verlangten Quellwerte werden besonders gute Ergebnisse im Bereich von 20 bis 40 Gew.-% Ascheanteil erzielt. Die für den Ascheanteil vorstehend und nachfolgend angegebenen Gewichts -%-Werte sind auf die Trockenmörtelmischung, also nicht auf den Nassmörtel ( = Trockenmörtel + Wasser) bezogen.

Bei Estrichmörteln, die im sog. Fliessestrichverfahren verarbeitet werden, bei dem das vorerwähnte Stampfen und Abziehen fortfällt, weil die rheologischen Eigenschaften der Mörtelmasse deren Verteilung auf der Unterlage und die Einnivellierung der Oberfläche begünstigen, liegt die Obergrenze des Ascheanteils bei etwa 60 Gew.-%. Hinsichtlich Biegezugfestigkeit und Quellwert werden besonders gute Ergebnisse mit Ascheanteilen zwischen 20 und 40 Gew.-% erhalten. Bei Ascheanteilen deutlich über 60 Gew.-% kann ein unerwünschtes Absetzen der Asche Nassmörtel eintreten.

Der für den erfindungsgemässen Estrichmörtel verwendete Anhydritbinder entspricht der vorerwähnten DIN 4208. Die eingesetzte Wirbelschichtasche kann hinter dem Fliessbett, dem Zyklon oder Filter der eingangs erwähnten Wirbelschichtfeuerungsanlagen entnommen werden.

Die Menge des bei der Aufbereitung des Nassmörtels verwendeten Anmachwassers entspricht einem Wasser/Feststoff-Verhältnis von 0,20 bis 0,28, vorzugsweise 0,22 bis 0,26.

Der Sandanteil in dem erfindungsgemässen Estrichmörtel kann auf den in der Wirbelschichtasche enthaltenen $SiO_2$-Anteil abgestimmt werden, so dass sich auch durch die Einsparung an Sand eine Herabsetzung der Rohstoff-Einstandskosten für den Estrichmörtel ergibt. Bei einem $SiO_2$-Gehalt der Asche von um 40 Gew.-% kann der Zusatz von Sand gegenüber dem Stand der Technik um etwa 30 % gesenkt werden und für einen Fliessestrich mit ausreichender Festigkeit braucht der Sandanteil nur noch zwischen 10 und 20 Gew.-%, bezogen auf die Trockenmörtelmischung, zu liegen. Das im Einzelfall günstigste Magerungsverhältnis kann wiederum durch einfache Versuche in Anlehnung an die vorerwähnten DIN-Vorschriften ermittelt werden. Die Körnung des Sandes sollte kleiner als 1,2 mm sein.

Die Praxis hat gezeigt, dass bei Anwendung der Erfindung die Rohstoffkosten für einen Fliessestrich im Vergleich Stand der Technik um zwischen 25 bis 35 % gesenkt werden können. Dabei fällt neben der erwähnten Einsparung an Sand der teilweise Ersatz des synthetischen oder natürlichen Anhydrits durch die Asche besonders ins Gewicht. Je nach dem Calciumsulfatgehalt der Asche liegt das Verhältnis Anhydrit / Asche zweckmäßig zwischen 1:1 und 4:1, vorzugsweise zwischen 3:2 und 4:3. Der Anteil an Anhydrit liegt im allgemeinen zwischen 40 und 70 Gew.%, vorzugsweise 45 und 60 Gew.% ,bezogen auf den Gesamtgehalt des Mörtels an Feststoffen.

## Beispiel 1

Für die Aufbereitung eines Estrichmörtels wurde eine aus dem Flugs taub einer Wirbelschichtfeuerungsanlage stammende Asche verwendet, die bei der Analyse folgende Werte ergab:

| | |
|---|---|
| Siliciumdioxid | 42,1 Gew.-% |
| Eisen-III-Oxid | 5,1 Gew.-% |
| Aluminiumoxid | 17,2 Gew.-% |
| Calciumoxid | 16,8 Gew.-% |
| Magnesiumoxid | 1,6 Gew.-% |
| Kaliumoxid | 2,89 Gew.-% |
| Natriumoxid | 0,55 Gew.-% |
| Sulfat | 8,9 Gew.-%. |

Hieraus errechnet sich ein Gehalt der Asche an

| | |
|---|---|
| Sand | 42,10 Gew.-% |
| $CaSO_4$ | 15,13 Gew.-% |
| CaO | 10,57 Gew.-%. |

Mit der vorerwähnten auf eine Körnung von < 0,5 mm gebrachten Asche wurde eine Trockenmörtelmischung folgender Zusammensetzung hergestellt:

| synthetischer Anhydrit (DIN 4208) | 50,54 Gew.% |
|---|---|
| Quarzsand (Körnung 0,7 - 1,2 mm) | 11,88 Gew.-% |
| Wirbelschichtasche (s.oben) | 35,68 Gew.-% |
| Anreger ($K_2SO_4$) | 0,89 Gew.-% |
| Dispersionspulver | 0,24 Gew.-% |
| Verflüssiger* | 0,48 Gew.-% |
| Entschäumer | 0,24 Gew.-% |
| Stabilisator (gegen Sedimentation) | 0,05 Gew.-% |
| | 100.00 Gew.-%. |

* sulfit- oder sulfonsäuremodifiziertes Harz auf der Basis eines Amino-s-triazins mit mindestens zwei $NH_2$-Gruppen

Dieser Trockenmörtelmischung wurde so viel Anmachwasser zugegeben, dass das Wasser/Feststoff-Verhältnis 0,24 betrug. Dadurch wurde eine Nassmörtelmischung erhalten, die sich im Fliessestrichverfahren verarbeiten liess.

Die nach DIN 4208 bestimmte Biegezugfestigkeit der oben genannten Mörtelmischung betrug nach einer Aushärtungszeit von 3 Tagen 4,0 N/mm², nach 7 Tagen 6,6 N/mm².

Die Quellwerte betrugen

| nach 2 Tagen | 0,61 mm/m |
|---|---|
| nach 3 Tagen | 0,68 mm/m |
| nach 4 Tagen | 0,71 mm/m |
| nach 5 Tagen | 0,72 mm/m |
| nach 6 Tagen | 0,71 mm/m |
| nach 7 Tagen | 0,71 mm/m. |

Diese Quellwerte können als sehr gut angesehen werden.

## Beispiel 2

Mit der im Beispiel 1 angegebenen Asche wurde eine Trockenmörtelmischung folgender Zusammensetzung hergestellt:

| synthetischer Anhydrit (DIN 4208) | 62,0 Gew.-% |
|---|---|
| Quarzsand (Körnung kleiner als 1,2mm) | 16,0 Gew.-% |
| Wirbelschichtasche (Körnung kleiner als 0,7 mm ) | 20,0 Gew.-% |
| Anreger ($K_2SO_4$) | 0,93 Gew.% |
| Dispersionspulver | 0,30 Gew.-% |
| Verflüssiger* | 0,48 Gew.-% |
| Entschäumer | 0,24 Gew.-% |
| Stabilisator (gegen Sedimentation) | 0,05 Gew.-% |
| | 100.00 Gew.-% |

* sulfit- oder sulfonsäuremodifiziertes Harz auf der Basis eines Amino-s-triazins mit mindestens zwei $NH_2$-Gruppen.

Dieser Trockenmörtelmischung wurde soviel Anmachwasser zugegeben, daß das Wasser/Feststoff-Verhältnis 0,20 betrug. Dadurch wurde eine Nassmörtelmischung erhalten, die sich im Fliessestrichverfahren verarbeiten ließ.

Die nach DIN 4208 bestimmte Biegezugfestigkeit der oben genannten Mörtelmischung betrug nach einer Aushärtungszeit von 3 Tagen 3,75 N/mm², nach 7 Tagen 6,2 N/mm².

**Ansprüche**

1. Verwendung eines aus einer Mischung aus Anhydritbinder, Sand, Wirbelschichtasche aus der Wirbelschichtverfeuerung schwefelhaltiger Brennstoffe, insbes. Kohle ,Wasser und Zusatzstoffen aus der Gruppe: Verflüssiger, Dispergentien, Stabilisatoren, Entschäumer, aufbereiteten Mörtels zur Herstellung von Estrichböden.

2. Verwendung nach Anspruch 1,
**dadurch gekennzeichnet**, dass der Anteil der Wirbelschichtasche 20 bis 50 Gew.-%, bezogen auf die Trockenmörtelmischung, beträgt.

3. Verwendung nach Anspruch 2,
**dadurch gekennzeichnet**,
dass der Anteil der Wirbelschichtasche 20 bis 40 Gew.-%, bezogen auf die Trockenmörtelmischung, beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | VGB KRAFTWERKSTECHNIK Band 69, Nr. 9, September 1989, Seiten 924-929; P. JAHN et al.: "Grundlagenuntersuchungen zur Verwertung von zirkulieren-den Wirbelschichtaschen" — — — | 1-3 | C 04 B 18/06 C 04 B 28/16 |
| A | CH-B-3 355 97  (BUREAU D'ETUDES et al.) * Ansprüche I,II,5; Beispiele 3,4 * — — — | 1-3 | |
| A | DE-A-3 818 465  (GFR) * Ansprüche 1,5 * — — — | 1 | |
| A | EP-A-0 287 050  (M.F. ACKERMANN) * Anspruch 1 *; & DE-A-3808519 (Kat. D) — — — | 1 | |
| D,A | DE-A-3 324 708  (L. & C. STEINMÜLLER) — — — | | |
| D,A | DE-A-3 726 903  (HEIDELBERGER ZEMENT) — — — | | |
| D,A | DE-B-1 077 130  (CHEMISCHE FABRIK KALK) — — — — — | | |

| RECHERCHIERTE SACHGEBIETE (Int. Cl.5) |
|---|
| C 04 B 18/00 C 04 B 28/00 |

Der vorliegende Recherchenbericht wurde für alle Patentansprüche erstellt

| Recherchenort | Abschlußdatum der Recherche | Prüfer |
|---|---|---|
| Berlin | 21 Dezember 90 | KESTEN W.G. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument